# EUROPEAN PATENT APPLICATION

(11) **EP 3 421 848 A1**
(43) Date of publication of application: **02.01.2019**
(21) Application number: 18178930.6
(22) Date of filing: 21.06.2018
(51) Int. Cl.: F16K 31/40

(54) **PILOT TYPE SOLENOID VALVE**

(30) Priority: 26.06.2017 JP 2017124690
(71) Applicant: Fujikoki Corporation, Tokyo 158-0082 (JP)
(72) Inventor: KATO, Shinsuke, Setagaya-ku, Tokyo 158-0082 (JP); ITOH, Masaharu, Setagaya-ku, Tokyo 158-0082 (JP)
(74) Representative: Schweiger, Martin

(57) **Abstract**

Provided is a pilot type solenoid valve (100) providing a good operation even within a wide temperature specification range. The A pilot type solenoid valve (100) is configured such that a main valve body (40) made of aluminum is slidably housed in a suction element (80) made of a magnetic material. Then, an alumite treatment layer is formed on a sliding surface in the main valve body (40) along which the suction element (80) slides by applying an alumite treatment to the sliding surface. Thereby, a linear expansion coefficient of the main valve body (40) is brought close to a linear expansion coefficient of the suction element (80).

## Description

### TECHNICAL FIELD

The present invention relates to a pilot type solenoid valve, and more particularly to a pilot type solenoid valve which is used in a refrigeration cycle of an automotive air conditioner and provides good operation even in a wide temperature specification range.

### BACKGROUND ART

There exists a solenoid valve as a kind of the valve which controls a flow of fluid. The solenoid valve is provided with a valve body which opens and closes a flow path, drives a movable element called as a plunger which is driven by a solenoid, and controls to open and close the flow path by moving the valve body in accordance with the movement of the movable element.

Further, the solenoid valve can be classified into a direct acting type solenoid valve and a pilot type solenoid valve depending on what drive system is used for a valve body. The one type whose valve body of a main body is directly connected to a drive plunger is called as "direct acting type", and the other type whose valve body of a main valve is driven by a fluid pressure via a diaphragm and a piston and is controlled is called as "pilot type". Here, the pilot type is able to reduce electric power for moving the solenoid, and is also used in a refrigeration cycle of an automotive air conditioner upon which stringent demands for downsizing and lightweighting are imposed.

As mentioned above, the pilot type solenoid valve which can be used in the refrigeration cycle of the automotive air conditioner has been conventionally known heretofore. For example, in Patent Literature 1, there is disclosed a composite valve in which the pilot type solenoid valve is built in. The composite valve can downsize a valve shape by simplifying a structure thereof, and can further suppress manufacturing costs by reducing manufacturing man hours. Further, the composite valve is striving for lightweighting of the whole system by simplifying the structure of the composite valve.

A countermeasure for lightweighting of the solenoid valve is one of the greatest problems immanent in a device which is used in the refrigeration cycle of the automotive air conditioner. To this end, it is effective to employ an aluminum material in a valve main body (a solenoid valve body) that is a main member.

### CITATION LIST

### PATENT LITERATURE

PATENT LITERATURE 1: Japanese Unexamined Patent Application Publication No. 2004-340560

### SUMMARY OF INVENTION

### TECHNICAL PROBLEM

In the pilot type solenoid valve disclosed in the Patent Literature 1, a sliding portion (a main valve body housing portion) which houses and causes a main valve body to slide is integrally provided in a suction element which activates a pilot valve. If the suction element has such a structure as mentioned above, the suction element should be made out of necessity by a magnetic material. In this way, making the other elements such as the valve main body and the main valve body by the aluminum material comes possible to lead to the lightweighting of the pilot type solenoid valve.

Here, the pilot type solenoid valve is structured such that a pilot valve is operated by the action of a solenoid force, thereby generating a differential pressure in the vicinity of the main valve body and operating the main valve body. Thus, in a case where the main valve body and a member with which the main valve body slidingly contacts are mainly made of distinct materials which have a different linear expansion coefficient. In such case, a problem arises that an appropriate clearance should be kept between the sliding members within a temperature specification range between about -40 °C and 80 °C when the pilot type solenoid valve is applied, for example, to a motor vehicle.

In a case where the main valve body is made of the aluminum material and the suction element is made, for example, of a magnetic stainless material, a linear expansion coefficient of the magnetic stainless is about 10.4 x 10⁻⁶/ °C, whereas a linear expansion coefficient of the aluminum is about 23.6 x 10⁻⁶/ °C. As a result, this problem significantly becomes apparent in the sliding portion between the main valve and the suction element.

The present invention is made to solve the problem mentioned above by applying an alumite treatment (anode oxide coating) to the sliding portion of the main valve body made of the aluminum in a case where the main valve body of the solenoid valve is made of the aluminum material and the suction element provided with the main valve body housing portion which houses the main valve body and allows the main valve body to be slid is made of the magnetic stainless, thereby bringing the linear expansion coefficient of the sliding portion in the main valve body close to the linear expansion coefficient of the main valve body housing portion in the suction element. In other words, even in a large temperature change (for example, between about -40 °C and 80 °C) in a usage environment of the solenoid valve, it is possible to keep a fluctuation in clearance between the main valve body made of the aluminum and the suction element made of the magnetic stainless small. This prevents an operation of the main valve from being locked due to an intrusion of a foreign material into the clearance, thereby improving foreign material resistance and operation durability by increasing the surface strength of the main valve body.

The alumite treatment is a surface treatment which artificially forms an oxide film on an aluminum surface by applying an electrolytic treatment to the aluminum, and is carried out for enhancing a corrosion resistance and a weather resistance of the aluminum. However, the alumite treatment brings about permeation of the oxide film into a parent material of the treatment layer (for example, about 10 µm), and at the same time, growth of the oxide film to the outside than the aluminum surface up to the same depth. As a result, it is hard to make the dimensional control of the parts. Therefore, in a case where there is no need to take the corrosion resistance into consideration, the alumite treatment can be dispensed with. Namely, since the inner surface of the valve main body in the pilot type solenoid valve used in the refrigerant cycle of the automotive air conditioner is only a portion through which the refrigerant passes, it is common that the alumite treatment is not applied thereto.

### SOLUTION TO PROBLEM

A pilot type solenoid valve comprising: a valve main body in which an inflow port and an outflow port for fluid are formed, and a main valve seat and a main valve chamber are formed between the inflow port and the outflow port; a main valve body in which a pilot passage and a pressure equalizing hole are formed, and which is arranged within the main valve chamber so as to be able to move toward and away from the main valve seat; a pilot valve body which is configured to be able to move toward and away from a pilot valve seat provided in the end of the pilot passage; a suction element which is provided with a main valve body housing portion which slidably houses the main valve body, a solenoid with coil, and a plunger which is connected to the pilot valve body and is sucked up by the suction element, the pilot valve body being driven by energizing the solenoid and the main valve body being driven by controlling a flow of the fluid in the pilot passage; wherein the main valve body is made of an aluminum material, and the suction element is made of a magnetic material, and wherein at least a surface in the main valve body along which the suction element slides is formed of an alumite treatment layer.

Further, the magnetic material composing the suction element is a magnetic stainless steel.

### Effect of the Invention

In the present invention, since the sliding portion which slides on the suction element made of the magnetic material in the main valve body made of the aluminum is formed of the alumite treated layer (anodized aluminium layer), a linear expansion coefficient of the main valve body comes close to a linear expansion coefficient of the suction element, thereby reducing a change in clearance between the main valve body and the suction element due to a temperature change. Accordingly, the present invention allows a good sliding operation of the pilot type solenoid valve within a wide temperature range. Further, the present invention reduces a flow rate change in the clearance portion due to the change in the environmental temperature, thereby improving a response of opening and closing operations. Further, the present invention improves a surface hardness of the sliding portion in the main valve body, and the contaminant resistance and the wear resistance.

### BRIEF DESCRIPTION OF DRAWINGS

Fig. 1 is a vertical cross sectional view explaining a structure of a pilot type solenoid valve according to an embodiment of the present invention, and shows a fully opened state in which both a pilot valve and a main valve are open (a state in which a solenoid is not energized);
Fig. 2 is a vertical cross sectional view explaining a structure of the pilot type solenoid valve according to the embodiment of the present invention, and shows a fully closed state in which both the pilot valve and the main valve are closed (a state in which the solenoid is energized); and
Fig. 3 is a vertical cross sectional view explaining a structure of the pilot type solenoid valve according to the embodiment of the present invention, and shows a state in which only the pilot valve is open just after the energization to the solenoid is stopped.

### DESCRIPTION OF EMBODIMENT

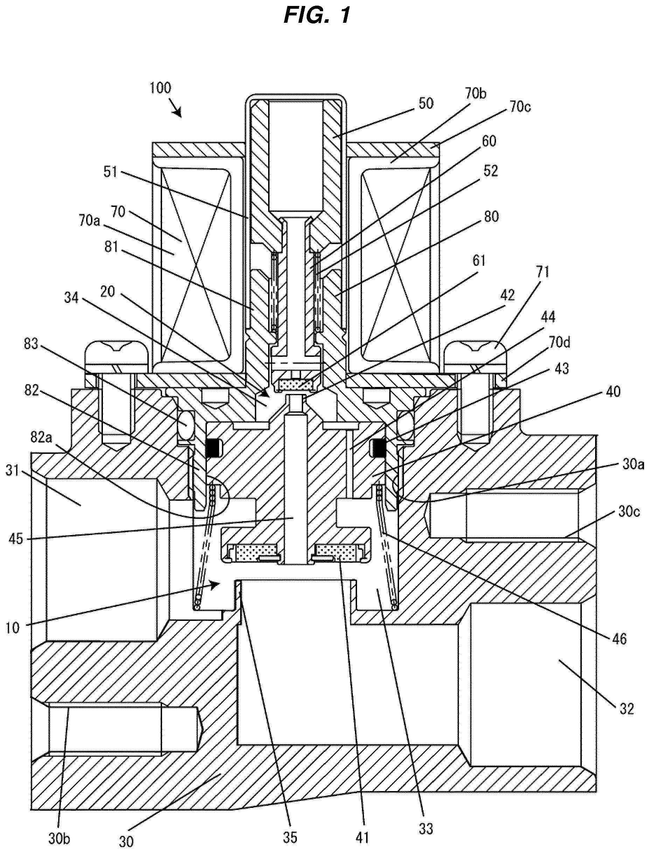

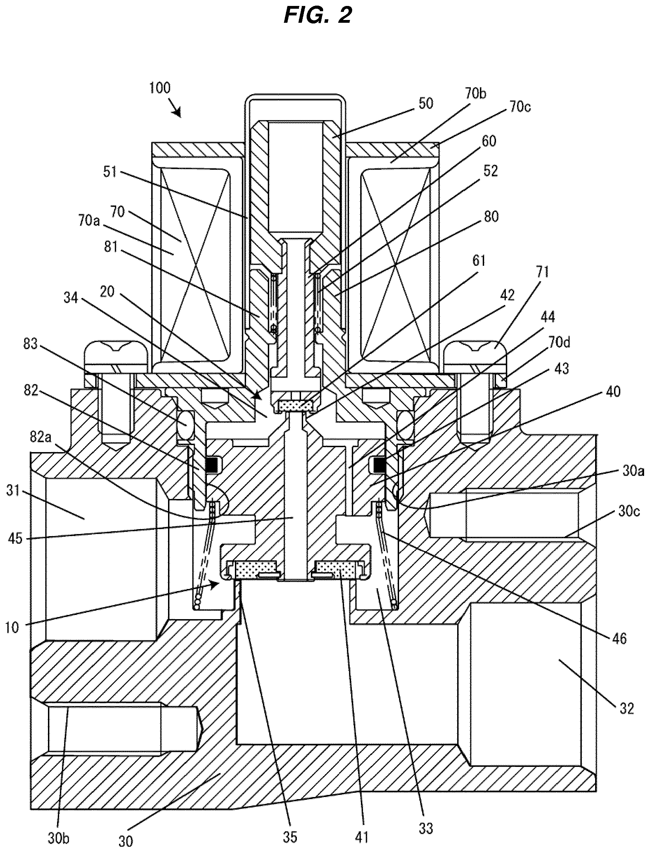

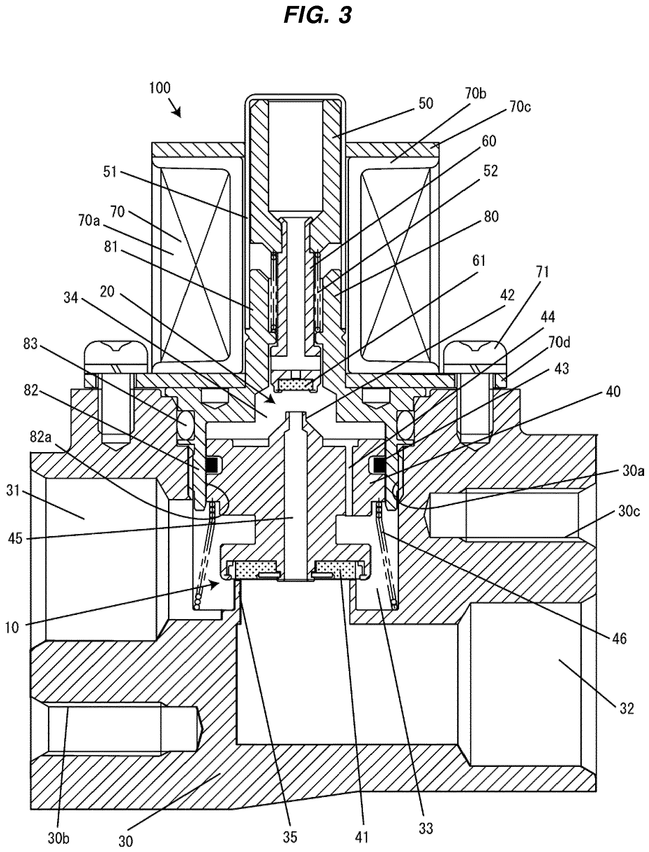

A description will be given below of an solenoid valve according to an embodiment of the present invention with reference to Figs. 1 to 3. Here, Fig. 1 is a view explaining a structure of the solenoid valve according to the embodiment of the present invention, and shows a fully opened state. Fig. 2 shows a fully closed state, and Fig. 3 shows a state in which only a pilot port is open. Note that in the following description of the embodiment, upper and lower directions, right and left directions, and inner and outer directions indicate directions in a paper surface of Figs. 1 to 3, and an interpretation narrowing a technical scope of the present invention should not be made.

A pilot type solenoid valve 100 according to an embodiment of the present invention is a pilot type solenoid valve which can be used in a refrigeration cycle of an automotive air conditioner provided with a main valve portion 10 and a pilot valve portion 20 within a valve main body 30, and controls to open and close a flow of fluid between a fluid inflow port 31 and a fluid outflow port 32 by opening and closing the main valve portion 10. The inflow port 31 and the outflow port 32 are formed in the valve main body 30 as a valve body, and a main valve chamber 33 is provided between the inflow port 31 and the outflow port 32. A main valve body 40 is housed in the main valve chamber 33 so as to be slidable in a vertical direction as mentioned later. The main valve body 40 is provided with the main valve portion 10 in one side (the lower side in the illustrated embodiment) in a sliding direction of the main valve body 40, and with the pilot valve portion 20 in the other side (the upper side in the illustrated embodiment). Female threads 30b and 30c are formed in the valve main body 30. The valve main body 30 and the main valve body 40 are made of an aluminum material such as aluminum or aluminum alloy.

At the center of an upper portion of the solenoid valve 100, a plunger 50 which causes a pilot valve body 60 to slide is arranged within a pipe 51 opened to the lower side. The pilot valve body 60 is connected to the plunger 50, and is configured to be slidable in a vertical direction within the pipe 51 together with the plunger 50. In other words, the plunger 50 is slidable in the vertical direction within the pipe 51 by actuation of a solenoid 70. A suction element 80 is provided as a means for driving the plunger 50 by the actuation of the solenoid. The suction element 80 made of a magnetic stainless steel is magnetized upon energizing the solenoid by an appropriate control means (not shown), and downwardly sucks the plunger 50 when a suction force prevailed against a repulsive force of a spring 52. The pipe 51 which houses the plunger 50 is downwardly open and is fixed to the suction element 80 by an appropriate means such as caulking or welding. The solenoid 70 is made by surrounding a periphery of a bobbin 70b around which a coil 70a is wound with a yoke 70c made of a magnetic material. The yoke 70c is provided at its lower side (the valve main body side) with a protruding portion 70d which outwardly protrudes.

The suction element 80 is formed as a whole into a multistage tubular shape in a vertical direction of which a through hole is formed, and the pipe 51 is attached thereto. In this state, the suction element 80 is inserted into or screwed to an upper large-diameter hole portion 30a formed in the valve main body 30. Thereafter, a male thread 71 is inserted into a through hole formed in the protruding portion 70d of the solenoid 70 which is inserted into an outer periphery of the pipe 51, and the male thread 71 is screwed with the female thread which is formed in the valve main body 30. Thereby, the suction element 80 is pressed down and fixed to the valve main body 30. The tubular shape of the suction element 80 is roughly composed of a small-diameter portion 81 in an upper portion and a large-diameter portion 82 in a lower portion. The lower open end of the pipe 51 is fixed to the small-diameter portion 81, and the large-diameter portion 82 is fixed to the valve main body 30 as mentioned above. The plunger 50 is slidably housed in a vertical direction in the pipe 51 fixed to the small-diameter portion 81.

A cylindrical main valve body housing portion (a space) 82a is formed in the inner side of the large-diameter portion 82 of the suction element 80, and the main valve body 40 is slidably housed in a vertical direction in the main valve body housing portion 82a. Since the space is divided into upper and lower sections by the main valve body 40, the lower section of the space acts as the main valve chamber 33, and the upper section thereof acts as a pilot valve chamber 34. It is configured such that on the outer side of the large-diameter portion 82 of the suction element 80, a dent between the large-diameter portion 82 and the valve main body 30 is sealed by an appropriate O-ring 83, and that on the inner side of the large-diameter portion 82, a dent between an outer peripheral surface (a portion along which the suction element 80 slides) of the main valve body 40 which slides within the large-diameter portion 82 and the large-diameter portion 82 is sealed by an appropriate main valve body sealing 43, thereby preventing the refrigerant from being leaking out.

In the illustrated embodiment according to the present invention, the small-diameter portion 81 and the large-diameter portion 82 of the suction element 80 compose, as one member an integrated cylindrical member via a step. Alternatively, it goes without saying that the small-diameter portion 81 and the large-diameter portion 82 may be configured respectively by separate members and both the members may be fixed by an appropriate means in some embodiments, although an illustration thereof is omitted. In short, the members may be ones in which the suction element 80 can suck up and drive the plunger 50 upon energizing the solenoid 70. In the present invention, the member which drives and sucks up the plunger 50, and slidably houses the main valve body 40 in a vertical direction is called as the suction element. It is no matter whether the suction element 80 is composed of one member or of a plurality of members.

The main valve portion 10 is composed of a main valve packing 41 which is attached to the lower side of the main valve body 40, and a main valve seat 35 which is provided between the inflow port 31 and the outflow port 32 of the valve main body 30. The pilot valve portion 20 is composed of a pilot valve packing 61 which is attached to the lower side of the pilot valve body 60, and a pilot valve seat 42 which is provided in the upper side of the main valve body 40. A pilot passage 45 and a pressure equalizing hole 44 are formed in the main valve body 40. The pilot valve seat 42 is provided in the end of the pilot passage 45. The pressure equalizing hole 44 is for communicating between the main valve chamber 33 and the pilot valve chamber 34, and a cross sectional area of the pressure equalizing hole 44 is smaller than a cross sectional area of the pilot passage 45.

The formation of the pressure equalizing hole 44 contributes to pressure equalization of the main valve chamber 33 and the pilot valve chamber 34, thereby facilitating and smoothening opening and closing operations of the main valve body 40. Further, in a state where the main valve portion 10 is closed, even when an abrupt pressure change is occurred arising from a compressor (not shown) connected to the solenoid valve 100, for example, the compressor is started, it is possible to exhibit an effect of promptly causing the refrigerant in the main valve chamber 33 to be flown out to the pilot valve chamber 34 so as to preclude the main valve portion 10 from being opened or making the main valve portion 10 difficult to be opened.

In the pilot type solenoid valve 100, the valve main body 30 and the main valve body 40 are made of the aluminum material such as the aluminum or the aluminum alloy, and the suction element 80 is made of the magnetic stainless steel. Further, the whole main valve body 40 or at least a surface along which the main valve body housing portion 82a of the suction element in the main valve body 40 slides is made of an alumite treated layer.

When the main valve body 40 is subject to an alumite treatment, the alumite treatment is carried out by dipping the main valve body 40 electrically connected to an anode into an electrolytic solution. At this time, an alumite treatment layer may be formed on the entire surface of the main valve body 40 by dipping the whole main valve body 40 into the electrolytic solution, or may be formed only on the surface along which the suction element 80 in the main valve body 40 slides, with the illustrated main valve body 40 being reversely upside down. In short, the alumite treatment layer may be one in which the linear expansion coefficients of the sliding inner surface of the suction element 80 and the sliding outer surface of the main valve body 40 can be brought into close to each other.

The electrolytic solution, for example, dilute sulfuric acid may be used, and a target alumite film thickness can be obtained by controlling concentration, a temperature and a dipping time of the solution. Further, in the event micro pores are occurred on the surface during the treatment, the micropores can be sealed by predetermined sealing treatment.

For example, when forming an alumite treatment layer of 10 µm by the alumite treatment, a permeable membrane of about 5 µm is formed within an aluminum raw material of the main valve body 40 before the treatment, and a growing membrane of about 5 µm is formed in the outer side of the raw material. Therefore, in the case of the tubular main valve body 40 that is the subject product of the present invention, the main valve body 40 having a target dimension can be obtained by manufacturing a product having a diameter (D-10 µm) of about 10 µm smaller than the outer dimension D of the final product by casting or machining the product and then applying alumite treatment to the product.

Next, a description will be given of an operation of the solenoid valve 100 by taking, as an example, a case where the solenoid valve 100 is applied to a refrigeration cycle with reference to Figs. 1 to 3. Fig. 1 shows a state in which the solenoid 70 (the coil 70a) is not energized. In this case, since no suction force is generated in the suction element 80, the plunger 50 is upwardly lifted within the pipe 51 by the action of the repulsive force of the spring 52, and the pilot valve portion 20 is held in an open state thereby. Further, the main valve body 40 is upwardly lifted within the main valve chamber 33 by the action of the repulsive force of the main valve body spring 46, and the main valve portion 10 is held in an open state.

When driving the compressor (not shown) in this state, , for example, a high temperature and high pressure refrigerant flows through the outflow port 32 from the inflow port 31 via the main valve portion 10 which is open within the main valve chamber 33. Further, since the amount of the refrigerant flowing from the pilot valve chamber 34 to the main valve chamber 33 via the pilot passage 45 is greater than the amount of the refrigerant flowing from the main valve chamber 33 to the pilot valve chamber 34 via the pressure equalizing hole 44, the pressure of the pilot valve chamber 34 becomes smaller than the pressure of the main valve chamber 33. This generates an upwardly acting force in the main valve body 40. As a result, the main valve portion 10 holds a sufficient open state by the action of the repulsive force of the main valve body spring 46, with the result that a flow from the inflow port 31 to the outflow port 32 can be maintained.

Next, when energizing the solenoid 70 in the state shown in Fig. 1, the suction element 80 and the plunger 50 are magnetized, an solenoid suction force is generated between both elements, and the plunger 50 is pulled down against the repulsive force. Since the pilot valve body 60 is integrally fixed to the lower side of the plunger 50, the pilot valve body 60 slides in a vertical direction within the pipe 51 in the same manner as the movement of the plunger 50. The plunger 50 is pulled down by the action of the suction force generated by the suction element 80, and the pilot valve body 60 is downwardly slid thereby. This abuts, the pilot valve packing 61 provided in the lower side of the pilot valve body 60 against the pilot valve seat 42 formed in the upper side of the main valve body 40, thereby bringing the pilot valve portion 20 into a closed state (that is, the pilot passage 45 is closed).

When the pilot passage 45 is closed, only the pressure equalizing hole 44 remains as a passage communicating with the pilot valve chamber 34 and the main valve chamber 33, and a pressure difference between both valve chambers do not occur. Further, when the main valve body is downwardly pressed down and the plunger 50 slides to the lowest point thereof, the main valve packing 41 formed in the lower side of the main valve body 40 abuts against the main valve seat 35 formed within the valve main body 30 to bring the main valve portion 10 into a closed state. Thereby, as shown in Fig. 2, the main valve portion 10 is brought into the closed state, the flow path extending from the inflow port 31 to the outflow port 32 is closed, with the result that the fluid such as the refrigerant is blocked.

When the energization to the solenoid 70 is stopped in the state shown in Fig. 2, the solenoid suction force of the suction element 80 generated by the solenoid 70 disappears, the plunger 50 is upwardly pushed up by the action of the repulsive force of the spring 52, the pilot valve body 60 upwardly moves together with the plunger 5. Then, the pilot valve packing 61 goes away from the pilot valve seat 42 which is provided in the upper surface side of the main valve body 40 and the pilot valve portion 20 comes to the open state, ending up a state shown in Fig. 3.

Thereby, the pilot valve chamber 34 is communicated with the outflow port 32 via the pilot passage 45 which is provided at the center of the main valve body 40, and a pressure within the pilot valve chamber 34 decreases from a high pressure to a low pressure.

Thereby, the main valve body 40 upwardly moves, and the main valve packing 41 fixed to the lower surface side of the main valve body 40 and goes away from the main valve seat 35 comes to the valve open state, ending up the state shown in Fig. 1.

In the description mentioned above, while the description is given on the assumption that the pilot valve packing 61 which opens and closes the pilot valve seat 42 is provided in the leading end of the pilot valve body 60, and the main valve packing 41 which opens and closes the main valve seat 35 is provided in the end of the main valve body 40, the present invention is not necessarily limited to this structure. It is a matter of course that it has no need for particularly providing the pilot valve packing 61 and/or the main valve packing 41 as long as the pilot valve seat 42 and/or the main valve seat 35 can be closed without any difficulty.

Further, while the description is given on the assumption that the main valve body 40 is entirely or partly formed of the alumite treatment layer, the alumite treatment layer may be formed in the valve main body 30, for example, for the purpose of enhancing a rust proofing effect. In this case, the alumite treatment layer may be formed over the inner and outer sides of the valve main body 30, or the alumite treatment layer may be formed only on an outer peripheral surface in the valve main body 30 with which an ambient air contacts.

Further, while the suction element 80 is made of the magnetic stainless steel, any material may be available as long as the material is the magnetic material. without being necessarily limited to this material.

### REFERENCE SIGN LIST

100: pilot type solenoid valve
10: main valve portion
20: pilot valve portion
30: valve main body
31: inflow port
32: outflow port
33: main valve chamber
34: pilot valve chamber
35: main valve seat
40: main valve body
41: main valve packing
42: pilot valve seat
43: main valve body sealing
44: pressure equalizing hole
45: pilot passage
46: main valve body spring
50: plunger
51: pipe
52: spring
60: pilot valve body
61: pilot valve packing
70: solenoid
80: suction element
81: small-diameter portion
82: large-diameter portion
83: O-ring

## Claims

1. A pilot type solenoid valve comprising:
a valve main body in which an inflow port and an outflow port for fluid are formed, and a main valve seat and a main valve chamber are formed between the inflow port and the outflow port;
a main valve body in which a pilot passage and a pressure equalizing hole are formed, and which is arranged within the main valve chamber so as to be able to move toward and away from the main valve seat;
a pilot valve body which is configured to be able to move toward and away from a pilot valve seat provided in the end of the pilot passage;
a suction element which is provided with a main valve body housing portion which slidably houses the main valve body;
a solenoid with coil; and
a plunger which is connected to the pilot valve body and is sucked up by the suction element, the pilot valve body being driven by energizing the solenoid and the main valve body being driven by controlling a flow of the fluid in the pilot passage;
wherein the main valve body is made of an aluminum material, and the suction element is made of a magnetic material, and
wherein at least a surface in the main valve body along which the suction element slides is formed of an alumite treatment layer.

2. The pilot type solenoid valve according to claim 1, wherein the magnetic material composing the suction element is a magnetic stainless steel.
